# EUROPEAN PATENT APPLICATION

(11) **EP 3 629 471 A1**
(43) Date of publication of application: **01.04.2020**
(21) Application number: 18197048.4
(22) Date of filing: 27.09.2018
(51) Int. Cl.: H02P 23/00

(54) **METHOD FOR PROGRAMMING AN ELECTRIC DEVICE**

(71) Applicant: Siemens Aktiengesellschaft, 80333 München (DE)
(72) Inventor: Papp, Gabor, 1063 Budapest (HU)
(74) Representative: Maier, Daniel Oliver

(57) **Abstract**

Method for programming an electric device, comprising the steps of:
a) a main configuration step (10) with following sub-steps:
a1) capturing (11) at least one main configuration parameter, which is related to the electric device, and
a2) generating (12) a main code based on the at least one main configuration parameter, and
a3) transferring (13) the main code to a programming device and storing in a memory of the programming device, and

b) an application configuration step (20) with following sub-steps, carried out by the programming device:
b1) loading (21) the main code from the memory, and
b2) capturing (22) at least one application configuration parameter, which is related to the operation of the electric device, and
b3) generating (23) an application code based on the at least one application configuration parameter and the main code, and
b4) programming (24) the application code into the electric device.

## Description

The invention relates to a method for programming an electric device and the usage thereof.

Further, the invention relates to a configuration system for configuring an electric device, comprising a programming device with a memory, and an application system with an electric device.

Electric devices, such as electric drives for electric motors, often need to be configured before operation. The configuration can be performed by programming a configuration code or a source code into a related processing unit with a memory within the electric device.

At the time of production of such a device or at the delivery to customers the final application of the device is often not known. Hence, the device is programmed in a generic manner, which is can be ineffective. Disadvantageously, the optimal performance of the device for a dedicated application disadvantageously is not achieved.

Further, the electric device can be a component of a higher-level application system, for instance an industrial manufacturing facility, an offshore platform or a construction machine, which determines the operational parameters of the electric device. Disadvantageously, such a device is often not optimally adjusted or aligned to the operational parameters of the higher-level application system, since the operational parameters of the electric device installed at the application system are often not well known at the point of production of the device.

Moreover, at the final installation of the device in some cases the operator is not skilled to optimize a configuration according to a dedicated application. Disadvantageously, the optimal performance of the device for the dedicated application is not achieved.

Disadvantageously, the location of the final installation of the device often is exposed to a harsh industrial environment, e.g. a manufacturing site, which can be disturbed in several aspects, e.g. at wireless communication means. On the other hand, the location of the final installation of the device is often within a solitary environment, e.g. offshore, which is not equipped with communication means. Both aspects can lead into a difficult configuration process.

A harsh industrial environment can be a location, where strong electromagnetic interferences occur, which can prevent a reliable communication of electronic systems using wireless or cellular data communication. For instance, the electromagnetic interferences can be caused by radio transmitters of sensor systems, high voltage discharge effects, e.g. by electro-welding systems, high noise voltage effects on powerlines or switching processes of high power electric facilities.

A solitary environment belongs to the opposite of a harsh industrial environment, which is a location where no or only limited cellular or wireless communication is available. A radio coverage of such systems does not allow reliable communication of electronic systems, which for instance can be located at offshore platforms, rural locations or highly compressed buildings, where a lot of concrete walls prevents good communication properties.

Moreover, the configuration in prior art uses mostly predefined parameters or predefined code sequences, which are not optimized for individual applications. Thus, the applications can run inefficiently.

It is the objective of the invention to overcome the disadvantages of the prior art.

The objective can be achieved by a method of the preamble of claim 1, wherein following steps are comprised:
a) a main configuration step with following sub-steps:
   a1) capturing at least one main configuration parameter, which is related to the electric device, and
   a2) generating a main code based on the at least one main configuration parameter, and
   a3) transferring the main code to a programming device and storing in a memory of the programming device, and
b) an application configuration step with following sub-steps, carried out by the programming device:
   b1) loading the main code from the memory, and
   b2) capturing at least one application configuration parameter, which is related to the operation of the electric device, and
   b3) generating an application code based on the at least one application configuration parameter and the main code, and
   b4) programming the application code into the electric device.

By the method according to the invention an improved or even optimal performance of an electric device can be achieved in a simple way by a proper configuration or programming with respect to a dedicated application and dedicated features.

The device comprises a computing unit with a memory, in which the code sequence or the configuration parameters can be stored. The computing unit can execute the code sequence or a generic code sequence using one or more of the configuration parameters, can sets operational mode and/or can control the operation of the electric device.

The optimal performance of electric devices can belong for instance to an efficient usage of a computer processing unit, a computer memory, special features for dedicated applications, efficient common usage of the memory or periphery, which can be set or configured by respective parameters of the electric device.

The invention can be further developed, if the at least one main code comprises a code set for a multiplicity of operational modes of the electric device. Hence, several possible operational modes can be prepared by specialists of the electric device at the development center of the electric device. The prepared data can be provided to the final installation, where a mode subset can be selected easily.

It is beneficial, if the at least one application configuration parameter is captured by a user dialog procedure carried out by the programming device. For example, a dialog guided selection relating to the context of one or more code sequences out of a set of predefined code sequences can be performed also by not skilled persons by a simplified user dialog, where no coding experience is necessary.

It is also beneficial, if the at least one application configuration parameter refers to a subset of the main code. Thus, several possible code sequences, e.g. regarding performance characteristics, can be prepared by specialists of the electric device at the development center of the electric device. The prepared data can be provided to the final installation, where a code subset can be selected easily.

The invention can be further developed, if the at least one application configuration parameter comprises a first parameter and a second parameter, and in step b2) of capturing the first parameter and the second parameter are captured individually. By a flexible arrangement of capturing the parameters, an optimal configuration procedure for the electric device can be achieved.

The invention can also be further developed, if the at least one application configuration parameter comprises a first parameter and a second parameter, and the first parameter refers to a first subset of the main code and the second parameter refers to a second subset of the main code, and the first code subset and the second code subset overlap at least partially. Thus, code changes in the overlapping part concern to the first subset and the second subset and the efficiency of the development of the code is improved.

It is beneficial, if in step b3) the overlapping portion of the first code subset and the second code subset of the application code is generated only once. Thus, the total code or configuration of the device can be optimized e.g. in execution performance or memory usage.

It is advantageous, if at least in step b3) of generating the application code, the programming device considers further data received from a data base, which is connected to the programming device.

The user dialog can be also carried out for instance by a machine, thus, the user dialog can be for instance very user friendly, complex or can use data analytics, i.e. big data from big data bases. The use if data analytics can allow not only pre-defined scenarios for a configuration of a device, but also the use of flexible and individual scenarios. For example, the application configuration step can consider statistics gathered from the data base and derive an optimal parameter set.

Big data is a term used to refer to the study and applications of data sets that are so big and complex that traditional data-processing application software are inadequate to deal with them, especially for mobile devices with limited computing and storing capabilities. Big data challenges include capturing data, data storage, data analysis, search, sharing, transfer, visualization, querying, updating, information privacy and data source.

The invention can be further developed, if the data base comprises a digital representation of the electric device and/or an application system including the electric device. The digital representation can allow a device or system analysis or a respective simulation. For example, an application configuration parameter of the electric device can be determined and optimized in the context of a simulation using the digital representation of the device or the system. The digital representation can be an electrical equivalent circuit, a thermal flux model, a model comprising mechanical parameters, such as vibrations, torque or thermal restraints.

The invention can be further developed, if the digital representation includes at least one operational parameter, which relates to at least one sensor measurement of least one operational mode of the device. Including sensor measurements of the operation of a device or a system can improve the aforesaid analysis or simulation with respect to accuracy or predictability. For example, the application configuration parameter of the electric device can be determined and optimized in the context of already available measurements of the parameter, such as power consumption in relation to the rotational speed, acoustic noise, operational stability or thermal heat dissipation in relation to the surrounding thermal environment. Thus, a further optimization can be performed.

It is beneficial, if the electric device comprises an electric drive for an electric motor, wherein the electric motor is controlled by the electric drive. For example, the electric motor can be a gear motor, a step motor or a permanent magnet brushless direct current motor. Basically, all kinds of direct current motors, alternating current motors or polyphase motors, synchronous or asynchronous, are suitable. Electric drives for electric motors, for instance frequency converter, current limiters, phase-controlled modulators, phase shifters or pole changers can be configurable or programmable according to the method of the invention. For economic benefits, generic motors can be produced in a high volume but can be individually programmed through a connected drive, such as a frequency converter with a programmable facility containing a memory for storing a program code and/or configuration parameters for specific applications according the method of the invention.

It is beneficial, if the programming device is a mobile programming device, preferably a wireless programming device. This aspect allows a configuration or programming at the final application or at the final installation respectively.

The objective of the invention can be achieved by a usage of the aforesaid method for configuring an electric device, wherein the method is used within a configuring of an electric device disposed to a harsh industrial environment or to a cellular uncovered environment regarding wireless communication. Since the memory of the programming device carries the main code, no data connection is necessary for carrying out the method. Thus, the programming method is reliable and robust within a harsh industrial environment and perfectly suited at a solitary environment.

The objective of the invention can be achieved by a configuration system for a configuring of an electric device, comprising a programming device with a memory, wherein the configuration system is configured to perform the steps of the aforesaid method according to the invention.

The configuration system can be further developed, if the configuration system further comprises a data base, which is connected to the programming device by a wired or wireless/ cellular data communication system, and the data base stores data regarding several operational modes of the electric device, and preferably the data base provides access to big data.

According to a beneficial further development it is foreseen, that the data base comprises a digital representation of the electric device and/or an application system including the electric device. The digital representation by means of a respective representation model can allow a device or application system analysis or a respective simulation, which can refer, for instance to electromagnetics, thermal or mechanical aspects, functional or runtime aspects.

According to a beneficial further development it is foreseen, that the digital representation includes at least one operational parameter, which relates to at least one sensor measurement of at least one operational mode of the device. Including sensor measurements of the operation of a device or a application system into representation models can improve aforesaid analysis or simulation.

It is beneficial, if the electric device within the configuration system according to the invention comprises an electric drive for an electric motor, wherein preferably a programmable electronic facility of the drive with an internal memory is configured to control the electric motor, since the adjustment of the operation of a drive and thereby of a connected motor can improve many application systems in a simple way.

Moreover, it is beneficial, if the programming device of the configuration system is a mobile programming device, preferably a wireless programming device, since such devices offer often the capabilities and can be modified in a simple way for the usage of a configuration method according to the invention.

The main code can be a generic code sequence, e.g. in a machine-level programming language like assembler or also a high-level programming language, which can be mapped to a set of codes related to several different operational modes of an electric device. The main code can also be a generic set of configuration parameters, which can be used to configure several different operational modes of an electric device. It can be foreseen for instance that only one operational mode is to be realized at the final operation of the device. Thus, operational modes not used can be deleted at a later stage at the installation procedure of the device. Further, parameters of the main code can be modified to adapt the features and performance of the device at a later stage, i.e. the application mode programming or configuration.

The application code can be a specific code sequence or a specific set of configuration parameters, selected out of the set of codes comprised by the main code, i.e. a code subset. The application code can represent an optimized code sequence or an optimized configuration of operational parameters regarding the final operational mode at the final application of the device. The optimized configuration or an optimized parameter set can be defined by performance characteristics.

For example, performance characteristics of an optimal device operation can be a noise reduced operation, a maximum torque at a dedicated motor speed, a dedicated number of revolutions of an electrical motor or a selected set of features related to the final installation of the device. Moreover, performance characteristics can also be achieved for instance by a reduced instruction set for optimal memory usage at the device or run time performance optimized code for the dedicated application at the final installation of the device.

The optimized parameter set can comprise several individual parameters within a predefined range respectively set at the main configuration set by the main code, which can be adjusted among each other for the adjustment of an optimal operational mode by a dedicated combination of the individual parameters.

The main code can be programmed into the electric device at a manufacturing site of the device or just before shipping of the device to a customer.

The application programming can be programmed preferably at the location of the final installation of the device or at the integration of the device in an application system. Such locations can be a harsh industrial environment or even a solitary environment.

A harsh industrial environment can be a location, where strong electromagnetic interferences occur. Such interferences can prevent a reliable communication of electronic systems for the programming of an electronic device using wireless or cellular data communication. For instance, electromagnetic interferences can be caused by radio transmitters of sensor systems, high voltage discharge effects, e.g. by electro-welding systems, high noise voltage effects on powerlines or switching processes of high power electric facilities.

A solitary environment belongs to the opposite of a harsh industrial environment. It is a location where no or only limited cellular or wireless communication is available, since the radio coverage of such systems does not allow reliable communication of electronic systems for the programming of an electronic device using wireless or cellular data communication. Such environments for instance can be located at offshore platforms, rural locations or highly compressed buildings, where a lot of concrete walls prevents good communication properties.

A programming device for the programming of electric devices at the installation site can be carried out by a mobile device, a handheld or a laptop for example. The programming device can be connected by a wired or wireless communication system to a data center, a data base or a computing cloud for further procedures, with support the configuration steps, preferably the application configuration step. For example, the data base can be located centrally at a remote data center or locally on a personal computer. Further, a portion of a centrally located data base, for instance the main code or additional dialog parameters together with related configuration parameters, can be transferred to a local personal computer for carrying out the method.

An applicable wireless programming device can be carried out by a mobile device a smartphone or a tablet for example. A wireless functionality is still beneficial for the transfer of the main code into the programming device, even if the application programming does not rely on wireless technology.

The programming device can be the same for the application configuration step and the application configuration step.

An overlapping portion of code can be a part of a code sequence comprised by code sets for different operational modes. At the point of main code programming it can be unclear, which operational modes will be selected at the application programming. Consequently, it can be necessary to provide for each operational mode the full set of codes. At the application programming, am optimization of selected codes sequences can be performed and doublets of parts of the code can be identified, and the respective code parts can be merged together.

In a further aspect of the invention, also a higher-level application system with an electric device can be optimized. With other words, the higher-level application system can be optimized generally, and the electric device can be optimized individually, but in the environment of the application system, using optionally for instance measurements of product qualification tests in simulations, which can be considered in digital representations by respective device and system models. If the electric device is configured by a configuration system according to invention, the electric device can be optimized within the overall context of the application system, in which the electric device is embedded. Thus, the operational parameters of the electric device can be optimally adjusted and aligned to the higher-level application system.

Further, it is beneficial for an application system with an electric device, if the electric device is configured by using the method according to the invention.

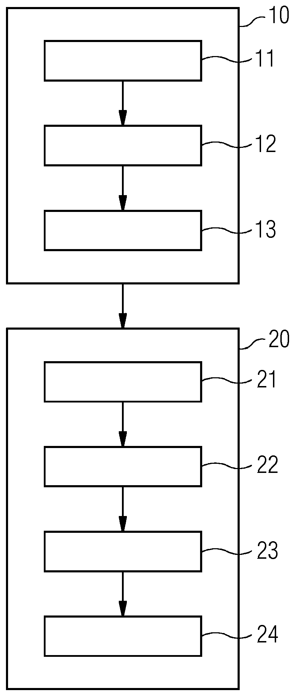

The invention shall now be explained in more detail below based on a preferred exemplary embodiment of the method according to the invention with reference to the accompanying figure 1.

In the embodiment an electronic drive of an electric motor is to be configured by the steps of the method according to the invention. The electronic drive comprises an electronic programmable unit with an internal memory. The motor is a generic model, which can be used for instance to motor a transportation belt at a logistic application, to motor a part of a construction machine or to motor a water pump.

Different applications may require different setups of the motor configuration, e.g. by a required maximum torque at a constant motor speed, or a constant torque over the motor speed, of a variable torque depending on signals from input ports of the motor. Further, the direction of the rotation of the motor can be different, depending on the orientation of the motor installation.

Since the motor can be still a standard model at the manufacturing to get economic benefits, the configuration must support all different features and all different operational modes, the generic motor is designed for. Hence, a main configuration must support the operation in all details.

Disadvantageously, the configuration in prior art would require a high portion of memory in the device and the configuration would not work in an efficient way, which can be improved by the invention by the split into a main configuration step and an application configuration step.

Moreover, a complex configuration in prior art can require expert programming skills for a specific configuration at the location of the installation of the motor, which additionally could be exposed to a difficult industrial environment.

To improve prior art, the method for programming or configuring an electric device according to the invention, which is shown in Fig. 1, comprises following steps:
a) a main configuration step 10, carried out at the manufacturing site of the device with following sub-steps:
   a1) capturing 11 at least one main configuration parameter, which is related to the electric device and which comprises a code set for a multiplicity of operational modes of the electric drive for the electric motor, and
   a2) generating 12 a main code based on the at least one main configuration parameter, and
   a3) transferring 13 the main code to a programming device and storing in a memory of the mobile programming device, and
b) an application configuration step 20, carried out at the place of final installation of the electric drive for the motor with following sub-steps, carried out by the programming device:
   b1) loading 21 the main code from the memory, and
   b2) capturing 22 at least one application configuration parameter, which is related to the operation of the electric drive for the motor and which is captured by a user dialog procedure carried out by the mobile programming device, and
   b3) generating 23 an application code based on the at least one application configuration parameter and the main code, which refers to a subset of the main code, and
   b4) programming 24 the application code into the electric drive for the motor.

The sequence of the execution of the steps 10, 20, i.e. the sub-steps 11-13 and 21-24 is shown in Fig. 1.

A configuration system according to the invention with a programming device is configured to execute the aforesaid method to configure an electric device accordingly.

A transfer of the main code to the memory of the mobile programming device allows a programming at difficult industrial environments and an impact to the mobile programming device can be reduced, since no wireless or cellular data communication connection is required.

A user dialog procedure can be carried out by the mobile programming device to allow also non-experts to perform the application configuration step 20. A context driven dialog supports the separation between the steps of capturing 22 of parameters, which define the application code sequence or the configuration parameters and generating 23 as well as programming 24 of the drive for the motor.

The user dialog can be also carried out by a machine, for instance a computing unit, i.e. a robot. In the case, that the installation site provides a data communication path, wired or wireless, the machine can also be organized logically in a computer cloud. This has the advantage that the user dialog can be for instance very user friendly, complex or can use data analytics, i.e. big data from one or more data bases.

The use of data analytics can allow not only pre-defined scenarios for a configuration of a device, but also the use of individual scenarios. For instance, a person can capture measurement data regarding temperature, humidity, noise levels or electromagnetic interferences. A request to a data base can search for a combination of these parameters, which wasn't requested before. An intelligent configuration could consider statistics of error rates in similar environments gathered from the data base and can derive an optimal parameter set.

If the data base comprises a digital representation of the electric device and/or an application system, in which the electric device is embedded, for instance the application configuration parameters of the electric device can be determined and optimized in the context of a simulation.

Hence, the at least one application configuration parameter comprises a first parameter and a second parameter, and in step b2) of capturing 22 the first parameter and the second parameter are captured individually.

The first parameter refers to a first subset of the main code and the second parameter refers to a second subset of the main code, and the first code subset and the second code subset overlap partially.

For efficiency purposes, in step b3) of generating 23 the overlapping portion of the first code subset and the second code subset of the application code is generated only once.

The invention is not restricted to the specific embodiment described in detail herein, but encompasses all variants, combinations and modifications thereof that fall within the framework of the appended claims.

## Claims

1. Method for programming an electric device, **characterized by** the steps:
a) a main configuration step (10) with following sub-steps:
a1) capturing (11) at least one main configuration parameter, which is related to the electric device, and
a2) generating (12) a main code based on the at least one main configuration parameter, and
a3) transferring (13) the main code to a programming device and storing in a memory of the programming device, and
b) an application configuration step (20) with following sub-steps, carried out by the programming device:
b1) loading (21) the main code from the memory, and
b2) capturing (22) at least one application configuration parameter, which is related to the operation of the electric device, and
b3) generating (23) an application code based on the at least one application configuration parameter and the main code, and
b4) programming (24) the application code into the electric device.

2. Method according to the preceding claim, wherein the at least one main code comprises a code set for a multiplicity of operational modes of the electric device.

3. Method according to one of the preceding claims, wherein the at least one application configuration parameter is captured by a user dialog procedure carried out by the programming device.

4. Method according to one of the preceding claims, wherein the at least one application configuration parameter refers to a subset of the main code.

5. Method according to one of the preceding claims, wherein the at least one application configuration parameter comprises a first parameter and a second parameter, and in step b2) of capturing (22) the first parameter and the second parameter are captured individually.

6. Method according to one of the preceding claims, wherein the at least one application configuration parameter comprises a first parameter and a second parameter, and the first parameter refers to a first subset of the main code and the second parameter refers to a second subset of the main code, and the first code subset and the second code subset overlap at least partially.

7. Method according to the preceding claim, wherein in step b3) of generating (23) the overlapping portion of the first code subset and the second code subset of the application code is generated only once.

8. Method according to one of the preceding claims, wherein the programming device considers data received from a data base, which is connected to the programming device at least in step b3) of generating (23) the application code.

9. Method according to the preceding claim, wherein the data base comprises a digital representation of the electric device and/or an application system including the electric device, and preferably the digital representation includes at least one operational parameter, which relates to at least one sensor measurement of least one operational mode of the device.

10. Method according to one of the preceding claims, wherein the electric device comprises an electric drive for an electric motor.

11. Usage of the method according to one of claims 1 to 10 **characterized in that** the method is used for configuration of an electric device disposed to a harsh industrial environment or an uncovered environment regarding cellular/wireless communication.

12. Configuration system for configuring an electric device, comprising a programming device with a memory, **characterized in that** the configuration system is configured to perform the steps of the method according one of the claims 1 to 10.

13. Configuration system according to the preceding claim, wherein the configuration system further comprises a data base, which is connected to the programming device by a data communication system, and the data base stores data regarding several operational modes of the electric device, and preferably the data base provides access to big data.

14. Configuration system according to the preceding claim, wherein the data base comprises a digital representation of the electric device and/or an application system including the electric device, and preferably the digital representation includes at least one operational parameter, which relates to at least one sensor measurement of at least one operational mode of the device.

15. Configuration system according to one of the claims 12 to 14, wherein the electric device comprises an electric drive for an electric motor.

16. Configuration system according to one of the claims 12 to 15, wherein the programming device is a mobile programming device, preferably a wireless programming device.

17. Application system with an electric device, **characterized in that** the electric device is configured by a configuration system according to one of the claims 12 to 16.

18. Application system with an electric device, **characterized in that** the electric device is configured by using the method according one of the claims 1 to 10.
